# EUROPEAN PATENT SPECIFICATION

(11) **EP 3 453 131 B1**
(45) Date of publication and mention of the grant of the patent: **03.05.2023**
(21) Application number: 16901139.2
(22) Date of filing: 04.05.2016
(51) Int. Cl.: H04W 28/02, H04W 80/02, H04L 9/40, H04W 84/12

(54) **USER EQUIPMENT (UE) AND METHODS FOR RECEPTION OF PACKETS ON A SPLIT RADIO BEARER**
BENUTZERGERÄT (UE) UND VERFAHREN ZUM EMPFANGEN VON PAKETEN AUF EINEM GETEILTEN FUNKTRÄGER
ÉQUIPEMENT D'UTILISATEUR (UE) ET PROCÉDÉS DE RÉCEPTION DE PAQUETS SUR UN SUPPORT RADIO DIVISÉ

(43) Date of publication of application: 13.03.2019
(73) Proprietor: Apple Inc., Cupertino, CA 95014 (US)
(72) Inventor: KUGLER, Martin, 85586 Poing BY (DE); KALB, Thorsten, 80995 Munich BY (DE)
(74) Representative: Lang, Johannes
(86) International application number: PCT/US2016/030802
(87) International publication number: WO 2017/192138

(56) References cited:
- WO-A1-2015/020507
- WO-A1-2015/066281
- WO-A1-2015/139557
- US-A1- 2015 326 456
- ERICSSON: "PDCP reordering for split bearers", 3GPP DRAFT; R2-134229 - PDCP REORDERING FOR SPLIT BEARERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20131111 - 20131115 13 November 2013 (2013-11-13), XP050736976, Retrieved from the Internet: URL:http://www.3gpp.org/ftp/Meetings_3GPP_ SYNC/RAN/RAN2/Docs/ [retrieved on 2013-11-13]
- ERICSSON: 'On new PDCP status report for UE based flow control' R2-161590, 3GPP TSG-RAN WG2 #93 05 February 2016, MALTA, XP051055425
- 'PDCP reordering enhancement for LWA bearer' R2-162860, 3GPP TSG-RAN WG2 MEETING #93BIS 02 April 2016, DUBROVNIK, CROATIA, XP051082601
- 'Introduction of LWA PDCP status report' R2-161506, 3GPP TSG-RAN2 3 MEETING 93 06 February 2016, ST. JULIAN' S, MALTA, XP051054934

## Description

### TECHNICAL FIELD

The claims of the present invention pertain to wireless communications. Some embodiments relate to wireless networks including 3GPP (Third Generation Partnership Project) networks, 3GPP LTE (Long Term Evolution) networks, 3GPP LTE-A (LTE Advanced) networks, wireless local area networks (WLAN), Dual Connectivity (DC) arrangement and LTE LAN Aggregation (LWA) arrangements. The claims of the present invention relate to Packet Data Convergence Protocol (PDCP) and reception of packets on multiple physical links of a split radio bearer, defined by an apparatus and respective non-transitory computer-readable storage medium, as set out by the independent claims.

### BACKGROUND

A mobile network may support communication with mobile devices. In some cases, an increased data rate may be used, which may provide various challenges. As an example, an increased number of received packets may need to be managed at the mobile device. In some cases, such a task may be more challenging in scenarios in which multiple wireless links are used. Accordingly, there is a general need for methods and systems in these and other scenarios.
WO 2015/139557 A1 discloses an execution method of a Packet Data Convergence Protocol (PDCP) entity and a corresponding entity apparatus.
WO 2015/066281 A1 discloses embodiments of a User Equipment (UE) to support dual-connectivity with a Master Evolved Node-B (MeNB) and a Secondary eNB (SeNB) are disclosed herein. The UE may receive downlink traffic packets from the MeNB and from the SeNB as part of a split data radio bearer (DRB).

### SUMMARY

The present invention is defined by the features of the independent claim(s). Preferred advantageous embodiments thereof are defined by the sub-features of the dependent claims. Any reference to "embodiment(s)", "example(s)" or "aspect(s) of the invention" in this description not falling under the scope of the claims should be interpreted as illustrative example(s) for understanding the invention.

### BRIEF DESCRIPTION OF THE DRAWINGS

FIG. 1 is a functional diagram of a 3GPP network;
FIG. 2 illustrates a block diagram of an example machine;
FIG. 3 is a block diagram of an Evolved Node-B (eNB);
FIG. 4 is a block diagram of a User Equipment (UE);
FIG. 5 illustrates the operation of a method of communication in accordance with some claimed embodiments of the present invention;
FIG. 6 illustrates examples of split bearers;
FIG. 7 illustrates an example of packet reception and delivery;
FIG. 8 illustrates another example of packet reception and delivery;
FIG. 9 illustrates another example of packet reception and delivery;
FIG. 10 illustrates another example of packet reception and delivery; and
FIG. 11 illustrates another example of packet reception and delivery.

### DETAILED DESCRIPTION

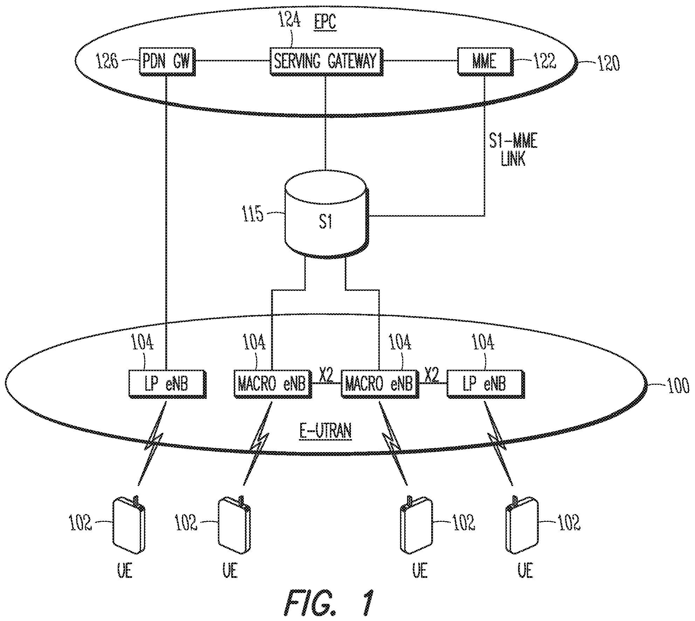

FIG. 1 is a functional diagram of a 3GPP network in accordance with some embodiments. It should be noted that embodiments are not limited to the example 3 GPP network shown in FIG. 1, as other networks may be used in some embodiments. As an example, a Fifth Generation (5G) network may be used in some cases. As another example, a wireless local area network (WLAN) may be used in some cases. Embodiments are not limited to these example networks, however, as other networks may be used in some embodiments. In addition, in some embodiments, one or more networks, including these example networks and/or other networks, may be used in combination. As an example, the UE 102 may be configured to communicate with a 3GPP network and with a WLAN in some cases. Such networks may or may not include some or all of the components shown in FIG. 1, and may include additional components and/or alternative components in some cases.

The network may comprise a radio access network (RAN) (e.g., as depicted, the E-UTRAN or evolved universal terrestrial radio access network) 100 and the core network 120 (e.g., shown as an evolved packet core (EPC)) coupled together through an SI interface 115. For convenience and brevity sake, only a portion of the core network 120, as well as the RAN 100, is shown.

The core network 120 includes a mobility management entity (MME) 122, a serving gateway (serving GW) 124, and packet data network gateway (PDN GW) 126. The RAN 100 includes Evolved Node-B's (eNBs) 104 (which may operate as base stations) for communicating with User Equipment (UE) 102. The eNBs 104 may include macro eNBs and low power (LP) eNBs.

According to the invention, an apparatus is provided comprising memory and processing circuitry configured to cause the UE 102 to receive one or more packets including Packet Data Convergence Protocol (PDCP) packets and other packets, on a physical link between the UE 102 and the eNB 104. The physical link is part of a split radio bearer. These embodiments will be described in more detail below.

The MME 122 is similar in function to the control plane of legacy Serving GPRS Support Nodes (SGSN). The MME 122 manages mobility aspects in access such as gateway selection and tracking area list management.
The serving GW 124 terminates the interface toward die RAN 100, and routes data packets between the RAN 100 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates an SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro and micro) terminate the air interface protocol and may be the first point of contact for a UE 102. In some embodiments, an eNB 104 may fulfill various logical functions for the RAN 100 including but not limited to RNC (radio network controller functions) such as radio bearer management, uplink and downlink dynamic radio resource management and data packet scheduling, and mobility management. In accordance with embodiments, UEs 102 may be configured to communicate Orthogonal Frequency Division Multiplexing (OFDM) communication signals with an eNB 104 over a multicarrier communication channel in accordance with an Orthogonal Frequency Division Multiple Access (OFDMA) communication technique. The OFDM signals may comprise a plurality of orthogonal subcarriers.

The S1 interface 115 is the interface that separates the RAN 100 and the EPC 120. It is split into two parts: the S1-U, which carries traffic data between the eNBs 104 and the serving GW 124, and the S1-MME, which is a signaling interface between the eNBs 104 and the MME 122. The X2 interface is the interface between eNBs 104. The X2 interface comprises two parts, the X2-C and X2-V. The X2-C is the control plane interface between the eNBs 104, while the X2-U is the user plane interface between the eNBs 104.

With cellular networks, LP cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. 2. picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

In some embodiments, a downlink resource grid may be used for downlink transmissions from an eNB 104 to a UE 102, while uplink transmission from the UE 102 to the eNB 104 may utilize similar techniques. The grid may be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element (RE). Each resource grid comprises a number of resource blocks (RBs), which describe the mapping of certain physical channels to resource elements. Each resource block comprises a collection of resource elements in the frequency domain and may represent the smallest quanta of resources that currently can be allocated. There are several different physical downlink channels that are conveyed using such resource blocks. With particular relevance to this disclosure, two of these physical downlink channels are the physical downlink shared channel and the physical down link control channel.

The physical downlink shared channel (PDSCH) carries user data and higher-layer signaling to a UE 102 (FIG. 1). The physical downlink control channel (PDCCH) carries information about the transport format and resource allocations related to the PDSCH channel, among other things. It also informs the UE 102 about the transport format, resource allocation, and hybrid automatic repeat request (HARQ) information related to the uplink shared channel. Typically, downlink scheduling (e.g., assigning control and shared channel resource blocks to UEs 102 within a cell) may be performed at the eNB 104 based on channel quality information fed back from the UEs 102 to the eNB 104, and then the downlink resource assignment information may be sent to a UE 102 on the control channel (PDCCH) used for (assigned to) the UE 102.

The PDCCH uses CCEs (control channel elements) to convey the control information. Before being mapped to resource elements, the PDCCH complex-valued symbols are first organized into quadruplets, which are then permuted using a sub-block inter-leaver for rate matching. Each PDCCH is transmitted using one or more of these control channel elements (CCEs), where each CCE corresponds to nine sets of four physical resource elements known as resource element groups (REGs). Four QPSK symbols are mapped to each REG. The PDCCH can be transmitted using one or more CCEs, depending on the size of DCI and the channel condition. There may be four or more different PDCCH formats defined in LTE with different numbers of CCEs (e.g., aggregation level, L=1, 2, 4, or 8).

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

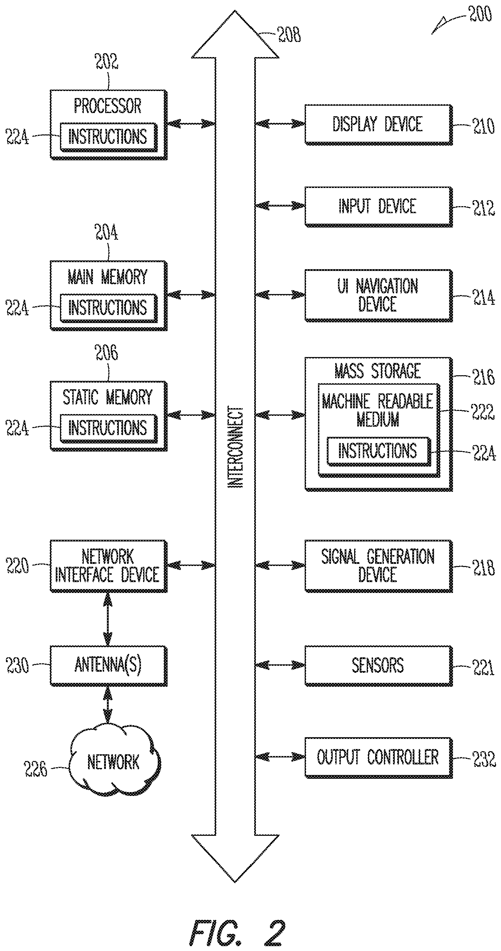

FIG. 2. illustrates a block diagram of an example machine in accordance with some embodiments. The machine 200 is an example machine upon which any one or more of the techniques and/or methodologies discussed herein may be performed. In alternative embodiments, the machine 200 may operate as a standalone device or may be connected (e.g., networked) to other machines. In a networked deployment, the machine 200 may operate in the capacity of a server machine, a client machine, or both in server-client network environments. In an example, the machine 200 may act as a peer machine in peer-to-peer (P2P) (or other distributed) network environment. The machine 200 may be a UE 102, eNB 104, access point (AP), station (STA), mobile device, base station, personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The machine (e.g., computer system) 200 may include a hardware processor 202 (e.g., a central processing unit (CPU), a graphics processing unit (GPU), a hardware processor core, or any combination thereof), a main memory 204 and a static memory 206, some or all of which may communicate with each other via an interlink (e.g., bus) 208. The machine 200 may further include a display unit 210, an alphanumeric input device 212 (e.g., a keyboard), and a user interface (UI) navigation device 214 (e.g., a mouse). In an example, the display unit 210, input device 212 and UI navigation device 214 may be a touch screen display. The machine 200 may additionally include a storage device (e.g., drive unit) 216, a signal generation device 218 (e.g., a speaker), a network interface device 220, and one or more sensors 221, such as a global positioning system (GPS) sensor, compass, accelerometer, or other sensor. The machine 200 may include an output controller 228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 216 may include a machine readable medium 222 on which is stored one or more sets of data structures or instructions 224 (e.g., software) embodying or utilized by any one or more of the techniques or functions described herein. The instructions 224 may also reside, completely or at least partially, within die main memory 204, within static memory 206, or within the hardware processor 202 during execution thereof by the machine 200. In an example, one or any combination of the hardware processor 202, the main memory 204, the static memory 206, or the storage device 216 may constitute machine readable media. In some embodiments, the machine readable medium may be or may include a non-transitory computer-readable storage medium.

While the machine readable medium 222 is illustrated as a single medium, die term "machine readable medium" may include a single medium or multiple media (e.g., a centralized or distributed database, and/or associated caches and servers) configured to store the one or more instructions 224. The term "machine readable medium" may include any medium that is capable of storing, encoding, or carrying instructions for execution by the machine 200 and that cause the machine 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 224 may further be transmitted or received over a communications network 226 using a transmission medium via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 220 may include one or more physical jacks (e.g., Ethernet, coaxial, or phone jacks) or one or more antennas to connect to the communications network 226. In an example, the network interface device 220 may include a plurality of antennas to wirelessly communicate using at least one of single-input multiple-output (SIMO), multiple-input multiple-output (MIMO), or multiple-input single-output (MISO) techniques. In some examples, the network interface device 220 may wirelessly communicate using Multiple User MIMO techniques. The term "transmission medium" shall be taken to include any intangible medium that is capable of storing, encoding or carrying instructions for execution by the machine 200, and includes digital or analog communications signals or other intangible medium to facilitate communication of such software.

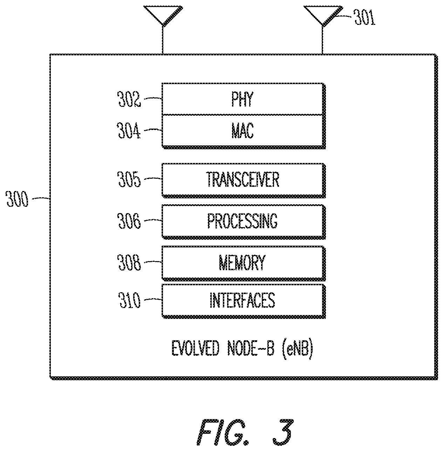

FIG. 3 is a block diagram of an Evolved Node-B (eNB) in accordance with some embodiments. It should be noted that in some embodiments, the eNB 300 may be a stationary non-mobile device. The eNB 300 may be suitable for use as an eNB 104 as depicted in FIG. 1. The eNB 300 may include physical layer circuitry 302 and a transceiver 305, one or both of which may enable transmission and reception of signals to and from the UE 200, other eNBs, other UEs or other devices using one or more antennas 301. As an example, the physical layer circuitry 302 may perform various encoding and decoding functions that may include formation of baseband signals for transmission and decoding of received signals. As another example, the transceiver 305 may perform various transmission and reception functions such as conversion of signals between a baseband range and a Radio Frequency (RF) range. Accordingly, the physical layer circuitry 302 and the transceiver 305 may be separate components or may be part of a combined component. In addition, some of the described functionality related to transmission and reception of signals may be performed by a combination that may include one, any or all of the physical layer circuitry 302, the transceiver 305, and other components or layers. The eNB 300 may also include medium access control layer (MAC) circuitry 304 for controlling access to the wireless medium. The eNB 300 may also include processing circuitry 306 and memory 308 arranged to perform the operations described herein. The eNB 300 may also include one or more interfaces 310, which may enable communication with other components, including other eNBs 104 (FIG. 1), components in the EPC 120 (FIG. 1) or other network components. In addition, the interfaces 310 may enable communication with other components that may not be shown in FIG. 1, including components external to the network. The interfaces 310 may be wired or wireless or a combination thereof. It should be noted that in some embodiments, an eNB or other base station may include some or all of the components shown in either FIG. 2 or FIG. 3 or both.

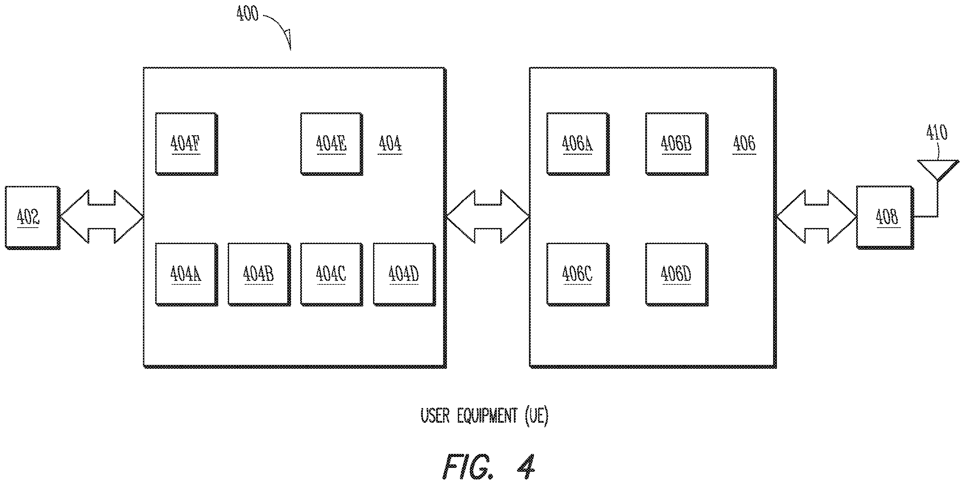

FIG. 4 is a block diagram of a User Equipment (UE) in accordance with some embodiments. The UE 400 may be suitable for use as a UE 102 as depicted in FIG. 1. In some embodiments, the UE 400 may include application circuitry 402, baseband circuitry 404, Radio Frequency (RF) circuitry 406, front-end module (FEM) circuitry 408 and one or more antennas 410, coupled together at least as shown. In some embodiments, other circuitry or arrangements may include one or more elements and/or components of the application circuitry 402, the baseband circuitry 404, the RF circuitry 406 and/or the FEM circuitry 408, and may also include other elements and/or components in some cases. As an example, "processing circuitry" may include one or more elements and/or components, some or all of which may be included in the application circuitry 402 and/or the baseband circuitry 404. As another example, "transceiver circuitry" may include one or more elements and/or components, some or all of which may be included in the RF circuitry 406 and/or the FEM circuitry 408. These examples are not limiting, however, as the processing circuitry and/or die transceiver circuitry may also include other elements and/or components in some cases. It should be noted that in some embodiments, a UE or other mobile device may include some or all of the components shown in either FIG. 2 or FIG. 4 or both.

The application circuitry 402 may include one or more application processors. For example, the application circuitry 402 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 404 may include circuitry such as, but not limited to, one or more single-core or multi-core processors. The baseband circuitry 404 may include one or more baseband processors and/or control logic to process baseband signals received from a receive signal path of the RF circuitry 406 and to generate baseband signals for a transmit signal path of the RF circuitry 406. Baseband processing circuitry 404 may interface with the application circuitry 402 for generation and processing of the baseband signals and for controlling operations of the RF circuitry 406. For example, in some embodiments, the baseband circuitry 404 may include a second generation (2G) baseband processor 404a, third generation (3G) baseband processor 404b, fourth generation (4G) baseband processor 404c, and/or other baseband processor(s) 404d for other existing generations, generations in development or to be developed in the future (e.g., fifth generation (5G), 6G, etc.). The baseband circuitry 404 (e.g., one or more of baseband processors 404a-d) may handle various radio control functions that enable communication with one or more radio networks via the RF circuitry 406. The radio control functions may include, but are not limited to, signal modulation/demodulation, encoding/decoding, radio frequency shifting, etc. In some embodiments, modulation/demodulation circuitry of the baseband circuitry 404 may include Fast-Fourier Transform (FFT), precoding, and/or constellation mapping/demapping functionality. In some embodiments, encoding/decoding circuitry of the baseband circuitry 404 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 404 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 404e of the baseband circuitry 404 may be configured to run elements of the protocol stack for signaling of the PHY, MAC, RLC, PDCP and/or RRC layers. In some embodiments, the baseband circuitry may include one or more audio digital signal processor(s) (DSP) 404f. The audio DSP(s) 404f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 404 and the application circuitry 402 may be implemented together such as, for example, on a system on a chip (SOC).

In some embodiments, the baseband circuitry 404 may provide for communication compatible with one or more radio technologies. For example, in some embodiments, the baseband circuitry 404 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 404 is configured to support radio communications of more than one wireless protocol may be referred to as multi-mode baseband circuitry.

RF circuitry 406 may enable communication with wireless networks using modulated electromagnetic radiation through a non-solid medium. In various embodiments, the RF circuitry 406 may include switches, filters, amplifiers, etc. to facilitate the communication with the wireless network. RF circuitry 406 may include a receive signal path which may include circuitry to down-convert RF signals received from the FEM circuitry 408 and provide baseband signals to the baseband circuitry 404. RF circuitry 406 may also include a transmit signal path which may include circuitry to up-convert baseband signals provided by the baseband circuitry 404 and provide RF output signals to the FEM circuitry 408 for transmission.

In some embodiments, the RF circuitry 406 may include a receive signal path and a transmit signal path. The receive signal path of the RF circuitry 406 may include mixer circuitry 406a, amplifier circuitry 406b and filter circuitry 406c. The transmit signal path of the RF circuitry 406 may include filter circuitry 406c and mixer circuitry 406a. RF circuitry 406 may also include synthesizer circuitry 406d for synthesizing a frequency for use by the mixer circuitry 406a of the receive signal path and the transmit signal path. In some embodiments, the mixer circuitry 406a of the receive signal path may be configured to down-convert RF signals received from the FEM circuitry 408 based on the synthesized frequency provided by synthesizer circuitry 406d. The amplifier circuitry 406b may be configured to amplify the down-converted signals and the filter circuitry 406c may be a low-pass filter (LPF) or band-pass filter (BPF) configured to remove unwanted signals from the down-converted signals to generate output baseband signals. Output baseband signals may be provided to the baseband circuitry 404 for further processing. In some embodiments, the output baseband signals may be zero-frequency baseband signals, although this is not a requirement. In some embodiments, mixer circuitry 406a of the receive signal path may comprise passive mixers, although the scope of the embodiments is not limited in this respect. In some embodiments, the mixer circuitry 406a of the transmit signal path may be configured to up-convert input baseband signals based on the synthesized frequency provided by the synthesizer circuitry 406d to generate RF output signals for the FEM circuitry 408. The baseband signals may be provided by the baseband circuitry 404 and may be filtered by filter circuitry 406c. The filter circuitry 406c may include a low-pass filter (LPF), although the scope of the embodiments is not limited in this respect.

In some embodiments, the mixer circuitry 406a of the receive signal path and the mixer circuitry 406a of the transmit signal path may include two or more mixers and may be arranged for quadrature downconversion and/or upconversion respectively. In some embodiments, the mixer circuitry 406a of the receive signal path and the mixer circuitry 406a of the transmit signal path may include two or more mixers and may be arranged for image rejection (e.g., Hartley image rejection). In some embodiments, the mixer circuitry 406a of the receive signal path and the mixer circuitry 406a may be arranged for direct downconversion and/or direct upconversion, respectively. In some embodiments, the mixer circuitry 406a of die receive signal path and the mixer circuitry 406a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 406 may include analog-to-digital converter (ADC) and digital-to-analog converter (DAC) circuitry and the baseband circuitry 404 may include a digital baseband interface to communicate with the RF circuitry 406. In some dual-mode embodiments, a separate radio IC circuitry may be provided for processing signals for each spectrum, although the scope of the embodiments is not limited in this respect.

In some embodiments, the synthesizer circuitry 406d may be a fractional-N synthesizer or a fractional N/N+1 synthesizer, although die scope of the embodiments is not limited in this respect as other types of frequency synthesizers may be suitable. For example, synthesizer circuitry 406d may be a delta-sigma synthesizer, a frequency multiplier, or a synthesizer comprising a phase-locked loop with a frequency divider. The synthesizer circuitry 406d may be configured to synthesize an output frequency for use by the mixer circuitry 406a of the RF circuitry 406 based on a frequency input and a divider control input. In some embodiments, the synthesizer circuitry 406d may be a fractional N/N+1 synthesizer. In some embodiments, frequency input may be provided by a voltage controlled oscillator (VCO), although that is not a requirement. Divider control input may be provided by either the baseband circuitry 404 or the applications processor 402 depending on the desired output frequency. In some embodiments, a divider control input (e.g., N) may be determined from a look-up table based on a channel indicated by the applications processor 402.

Synthesizer circuitry 406d of the RF circuitry 406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 406d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 406 may include an IQ/polar converter.

FEM circuitry 408 may include a receive signal path which may include circuitry configured to operate on RF signals received from one or more antennas 410, amplify the received signals and provide the amplified versions of die received signals to the RF circuitry 406 for further processing. FEM circuitry 408 may also include a transmit signal path which may include circuitry configured to amplify signals for transmission provided by the RF circuitry 406 for transmission by one or more of the one or more antennas 410.

In some embodiments, the FEM circuitry 408 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 406). The transmit signal path of the FEM circuitry 408 may include a power amplifier (PA) to amplify input RF signals (e.g., provided by RF circuitry 406), and one or more filters to generate RF signals for subsequent transmission (e.g., by one or more of the one or more antennas 410. In some embodiments, the UE 400 may include additional elements such as, for example, memory/storage, display, camera, sensor, and/or input/output (I/O) interface.

The antennas 230, 301, 410 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 230, 301, 410 may be effectively separated to take advantage of spatial diversity and the different channel characteristics that may result.

In some embodiments, the UE 400 and/or the eNB 300 may be a mobile device and may be a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a wearable device such as a medical device (e.g., a heart rate monitor, a blood pressure monitor, etc.), or other device that may receive and/or transmit information wirelessly. In some embodiments, the UE 400 or eNB 300 may be configured to operate in accordance with 3GPP standards, although the scope of the embodiments is not limited in this respect. Mobile devices or other devices in some embodiments may be configured to operate according to other protocols or standards, including IEEE 802.11 or other IEEE standards. In some embodiments, the UE 400, eNB 300 or other device may include one or more of a keyboard, a display, a non-volatile memory port, multiple antennas, a graphics processor, an application processor, speakers, and other mobile device elements. The display may be an LCD screen including a touch screen.

Although the UE 400 and the eNB 300 are each illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

It should be noted that in some embodiments, an apparatus used by the UE 400 and/or eNB 300 and/or machine 200 may include various components of the UE 200 and/or the eNB 300 and/or the machine 200 as shown in FIGs. 2-4. Accordingly, techniques and operations described herein that refer to the UE 400 (or 102) may be applicable to an apparatus for a UE. In addition, techniques and operations described herein that refer to the eNB 300 (or 104) may be applicable to an apparatus for an eNB.

In accordance with the invention, the UE 102 determines, for a group of two or more physical links of a split bearer arrangement, maximum sequence numbers (SNs) of packets received on the physical links. The UE 102 determines whether a reordering timer for a missing packet is to be halted based on the maximum SNs. The reordering timer is determined to be halted when an SN of the missing packet is less than the maximum SNs. The UE may also refrain from starting reordering timers for missing packets for which an SN is less than the maximum SNs. According to the invention, Packet Data Convergence Protocol (PDCP) packets are used. These embodiments are described in more detail below.

In some embodiments, split bearer infrastructures, like Dual Connectivity (DC) or LTE/WLAN Aggregation (LWA), may use a reordering mechanism on the receiver side in a PDCP layer, as downlink packets may be sent on separate, independent links or even different radio access technologies with specific transmissions delays, in some cases. On the receiver side, the PDUs (such as PDCP packets and/or other packets) may be merged and/or reordered according to SNs that may be part of PDU headers. The UE 102 may not be able to predict in advance on which link the DL PDU with a next SN will be received, in some embodiments. The PDCP layer may need to store SDUs in memory until gaps are filled. The packets may then be delivered to an upper layer, such as an application layer. In some embodiments, a DC arrangement may be used, in which the PDCP may receive DL PDUs from two different LTE RLC instances, as two cell groups may be present. In some embodiments, an LWA arrangement may be used, in which the PDCP layer may receive DL PDUs from RLC (legacy LTE) and via a WLAN (such as Wi-Fi and/or IEEE 802.11) link.

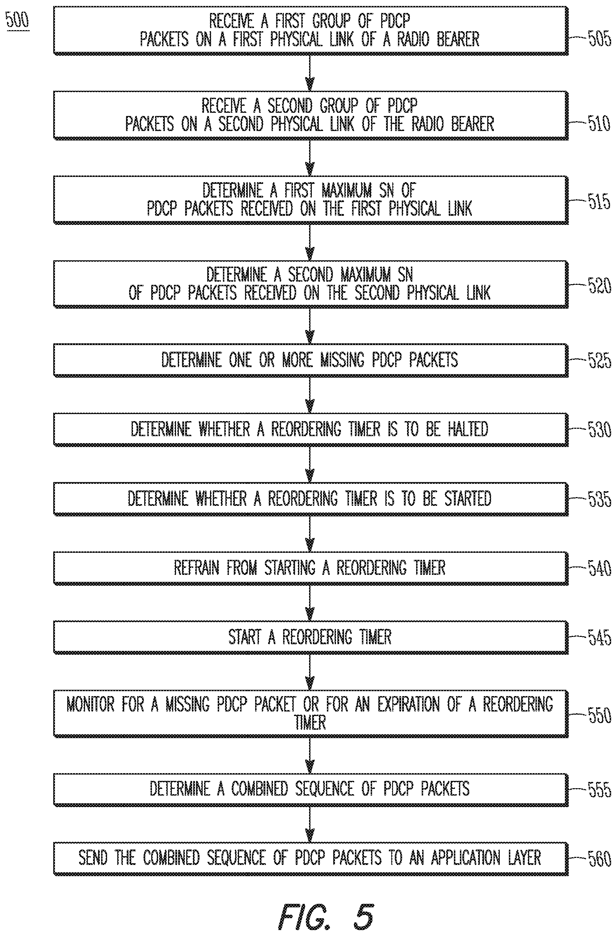

FIG. 5 illustrates the operation of a method of communication in accordance with some embodiments. It is important to note that embodiments of the method 500 may include additional or even fewer operations or processes in comparison to what is illustrated in FIG. 5. In addition, embodiments of the method 500 are not necessarily limited to the chronological order that is shown
in FIG. 5. In describing the method 500, reference may be made to FIGs. 1-4 and 6-11, although it is understood that the method 500 may be practiced with any other suitable systems, interfaces and components.

In addition, while the method 500 and other methods described herein may refer to eNBs 104 or UEs 102 operating in accordance with 3 GPP standards, 5G standards and/or other standards, embodiments of those methods are not limited to just those eNBs 104 or UEs 102 and may also be practiced on oilier devices, such as a Wi-Fi access point (AP) or user station (STA). In addition, the method 500 and other methods described herein may be practiced by wireless devices configured to operate in other suitable types of wireless communication systems, including systems configured to operate according to various IEEE standards such as IEEE 802.11. The method 500 may also refer to an apparatus for a UE 102 and/or eNB 104 and/or other device described above.

It should be noted that the method 500 and other methods described herein may be practiced by a wireless device that may be arranged to operate in accordance with one or more standards, such as 3GPP LTE standards, WLAN standards and/or other standards, in some embodiments. Accordingly, although reference may be made to a UE 102 in the description of the method 500, it is understood that any suitable wireless device, such as a STA 102 and/or other device, may be used in some embodiments. As an example, a UE 102 may be configured to receive packets from a 3GPP network and to receive packets from a WLAN, in some embodiments.

At operation 505 of the method 500, the UE 102 may receive a first group of one or more PDCP packets on a first physical link of a radio bearer. At operation 510, the UE 102 may receive a second group of one or more PDCP packets on a second physical link of the radio bearer. It should be noted that in some embodiments, the first and second physical links may be part of the same radio bearer. According to the invention, the radio bearer may be a split radio bearer, and the first and second physical links are aggregated as part of the split radio bearer.. It should be noted that embodiments are not limited to usage of PDCP packets, as other packets may be used in some embodiments. The PDCP packets according to the invention and other packets according to an embodiment thereof include a sequence number (SN) and/or other index, in
some cases. As a non-limiting example, the PDCP may include a protocol data unit (PDU) header that may include an SN. The UE 102 may determine a first maximum SN based on SNs of the first group at operation 515 and may determine a second maximum SN based on SNs of the second group at operation 520.

It should be noted that in some embodiments, more than two physical links may be included in the radio bearer. According to the invention, the radio bearer is a split radio bearer and the multiple physical links are aggregated as part of the split radio bearer. Accordingly, one or more operations described herein, such as those described as part of the method 500 and/or other operations, may be applied to such embodiments. For instance, the UE 102 may receive a third group of PDCP packets on a third physical link of the radio bearer and may determine a third maximum SN based on SNs of the third group. According to the invention, the UE 102 determines, for a group of two or more physical links of a split radio bearer, maximum SNs of PDCP packets received on each of the physical links.

It should be noted that embodiments are not limited to reception of the first group of PDCP packets before the reception of the second group of PDCP packets. As an example, one or more portions of the first group of PDCP packets may be received before and/or after one or more PDCP packets of the second group. As another example, one or more packets of the first group may be received during a time period that overlaps a time period in which one or more packets of the second group are received. As another example, a first portion of the first group may be received before a first portion of the second group, and the first portion of the second group may be received before a second portion of the first group.

According to the invention, the first physical link and the second physical link are aggregated as part of a split bearer. As an example, the UE 102 may receive PDCP packets from multiple base stations (eNB 104, AP and/or oilier) over different wireless links. As another example, the UE 102 may receive PDCP packets from a base station (eNB 104, AP and/or other) over multiple wireless links, such as wireless links of different carrier frequencies.

As another example, die first physical link may include a first 3GPP LTE wireless link, the second physical link may include a second 3GPP LTE wireless link, and the first and second physical links may be aggregated as part of a split radio bearer in accordance with a Dual Connectivity (DC) arrangement. In some embodiments, the first physical link may include a first cellular network wireless link and the second physical link may include a second cellular network wireless link, and the first and second physical links may be aggregated as part of a split radio bearer in accordance with a Dual Connectivity (DC) arrangement. Accordingly, the UE 102 may receive PDCP packets on multiple 3GPP LTE wireless links in this example. As another example, the first physical link may include a first 3GPP LTE wireless link, the second physical link may include a WLAN wireless link, and the first and second physical links may be aggregated as part of a split radio bearer in accordance with an LTE/WLAN Aggregation (WLA) arrangement. Accordingly, the UE 102 may receive a first group of PDCP packets on a 3GPP LTE wireless link and may receive a second group of PDCP packets on a WLAN wireless link in this example.

It should be noted that embodiments are not limited to 3GPP LTE wireless links or to WLAN wireless links, as other suitable wireless links may be used in some embodiments. It should also be noted that these examples may be extended to more than two networks, in some embodiments. As an example, three or more 3GPP LTE wireless links may be used. As another example, three or more WLAN wireless links may be used. As another example, a combination of 3GPP LTE wireless, WLAN wireless links and/or other wireless links may include three or more wireless links.

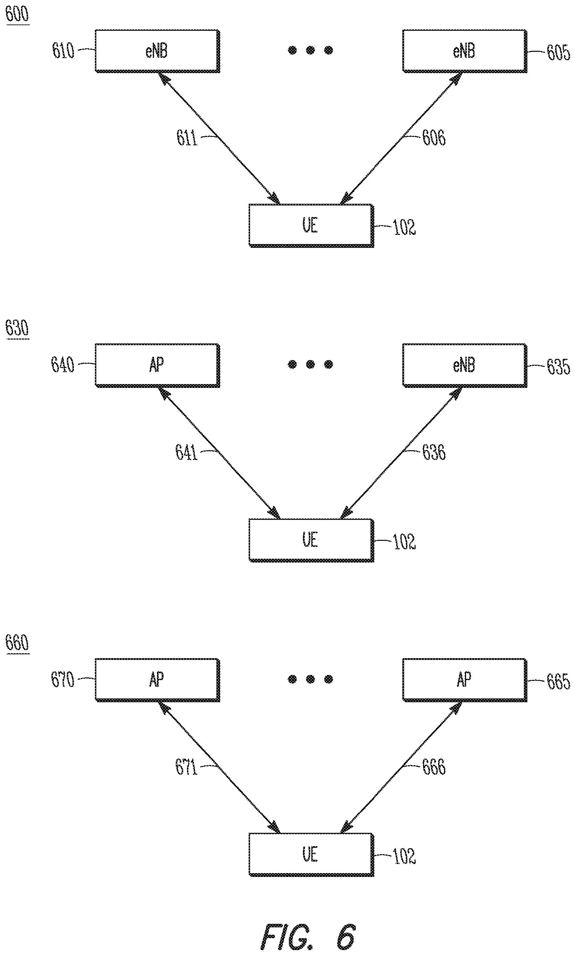

FIG. 6 illustrates examples of split bearers in accordance with some embodiments. It should be noted that the examples shown in FIG. 6 may illustrate some or all concepts described herein, in some cases, but embodiments are not limited by the examples shown. For instance, the number, type and/or arrangement of components shown is not limiting.

In the example split bearer arrangement 600, the UE 102 may communicate with a first eNB 605 over a first wireless link 606 of a split radio bearer and may communicate with a second eNB 610 over a second wireless link 611 of the split radio bearer. Accordingly, the first and second wireless links may be part of a split bearer arrangement, in some cases. For instance, a Dual Connectivity (DC) arrangement may be used. It should be noted that in some embodiments, the UE 102 may communicate with more than the two eNBs 605, 610 as part of the split bearer arrangement 600.

In the example split bearer arrangement 630, the UE 102 may communicate with a first eNB 635 over a first wireless link 636 of a split radio bearer and may communicate with an AP 640 over a second wireless link 641 of the split radio bearer. Accordingly, the first and second wireless links may be part of a split bearer arrangement, in some cases. For instance, an LTE/WLAN Aggregation (LWA) arrangement may be used. It should be noted that in some embodiments, the UE 102 may communicate with more than the eNB 635 and AP 640 as part of the split bearer arrangement 600.

In the example split bearer arrangement 660, the UE 102 may communicate with a first AP 665 over a first wireless link 666 of a split radio bearer and may communicate with a second AP 670 over a second wireless link 671 of the split radio bearer. Accordingly, the first and second wireless links may be part of a split bearer arrangement, in some cases. It should be noted that in some embodiments, the UE 102 may communicate with more than the two APs 605, 610 as part of the split bearer arrangement 660.

Returning to the method 500, at operation 525, the UE 102 determines SNs of one or more missing PDCP packets. As an example, the first group of PDCP packets may be combined with die second group of PDCP packets to form a combined sequence of PDCP packets. The combined sequence may be reordered using the SNs of the PDCP packets, and the UE 102 may determine one or more missing PDCP packets based on the SNs of the combined sequence.

It should be noted that in some cases, the SNs may include a bit field of a suitable size, such as 12, 15, 18 or other suitable number of bits. In some cases, the SNs of a sequence of PDCP packets may reach the maximum value that can be represented by the bit field and may start over at a value of 0. For instance, when 12 bits are used, the SNs may take values in the range of 0, 1, ... 4095, and a particular sequence of PDCP packets may take SNs of 4094, 4095, 0, 1, and 2. It is understood that operations and/or techniques described herein (such as determination of a maximum SN, reordering of PDCP packets according to SN, determination of whether a first SN is greater than or less than a second SN, and/or other operations) may take this roll over into account. For instance, the maximum SN of the previously described sequence may be 2 (not 4095), as the PDCP packet with SN of 2 is intended to be the latest PDCP packet in the sequence and the PDCP packet with SN of 4094 is intended to be the earliest PDCP packet in the sequence.

Returning to the method 500, the UE 102 may perform one or more of operations 530-550. It should be noted that embodiments are not limited to performance of all operations shown in FIG. 5. Accordingly, the UE 102 may perform a portion of operations 530-550 in some cases. Examples of such will be presented below.

At operation 530, the UE 102 determines whether a PDCP reordering timer for a missing PDCP packet is to be halted. The determination is based at least partly on whether an SN of the missing PDCP packet is less than the maximum SNs of the PDUs received on the physical links (such as the first maximum SN and the second maximum SN when two physical links are used). As a non-limiting example, the reordering timer may have been previously started for the missing PDCP packet when the maximum SN received on at least one of the physical links was less than the SN of the missing PDCP packet. The UE 102 subsequently receives additional PDCP packets on one or more of the physical links, after which an updated set of maximum SNs may all be higher than the SN of the missing PDCP packet. Accordingly, the UE 102 may stop, halt and/or disable the reordering timer for the missing PDCP packet.

At operation 535, the UE 102 determines whether a PDCP reordering timer for a missing PDCP packet is to be started. According to the invention, the determination is based on a comparison of an SN of the missing PDCP packet with maximum SNs of the physical links of the split bearer. For instance, the UE 102 may refrain from starting the PDCP reordering timer when the SN of the missing PDCP packet is less than all of the maximum SNs and the UE 102 starts the PDCP reordering timer when at least one of the maximum SNs is less than the SN of the missing PDCP packet. It should be noted that in some cases, the UE 102 may determine a group of missing PDCP packets, and may attempt to determine one of the missing PDCP packets (such as the one with a lowest SN) for which a PDCP reordering timer is to be started. In this case, if the SNs of all missing PDCP packets are less than all of the maximum SNs, the UE 102 may refrain from starting PDCP reordering timers.

The UE 102 may refrain from starting a PDCP reordering timer at operation 540. The UE 102 may start a PDCP reordering timer at operation 545. As previously described, embodiments are not limited to performance of all operations shown in FIG. 5. As an example, the UE 102 may perform one of the operations 540 or 545 for a particular missing PDCP packet, in some cases. As another example, the UE 102 may determine that a PDCP reordering timer is not to be started for a first PDCP packet and may perform operation 540 for the first PDCP packet. The UE 102 may also determine that a PDCP reordering timer is to be started for a second PDCP packet and may perform operation 545 for the second PDCP packet.

At operation 550, the UE 102 may monitor for a missing PDCP packet or for an expiration of a PDCP reordering timer. As an example, when a PDCP reordering timer has started for a missing PDCP packet, the UE 102 may monitor for a reception of the missing PDCP packet on the physical links. The UE 102 may stop the PDCP reordering timer after the missing PDCP packet is received, in some cases. The UE 102 may also monitor for an expiration of the PDCP reordering timer for the missing PDCP packet. After the expiration, the UE 102 may determine that the missing PDCP packet is lost, in some cases. The UE 102 may also exclude the lost PDCP packet from a combined sequence of PDCP packets that is to be sent to an application layer of the UE 102 and/or other destination.

As another example, the UE 102 may one determine SNs of one or more missing PDCP packets based on SNs of a first group of PDCP packets received on a first physical link and a second group of PDCP packets received on a second physical link, in which the first and second physical links may be aggregated as part of a split radio bearer. When the SNs of the missing PDCP packets are less than a maximum SN of the first group and a maximum SN of the second group, the UE 102 may refrain from starting PDCP reordering timers for the missing PDCP packets. In some cases, the UE 102 may determine that the missing PDCP packets have been lost. The UE 102 may also combined and/or reorder the first and second groups into a combined sequence of PDCP packets that excludes the lost PDCP packets. For instance, the combined sequence may include one or more gaps for the lost PDCP packets. The combined sequence may be sent to an application layer of the UE 102 and/or other destination, in some cases. When at least one of the SNs of the missing PDCP packets is greater than the maximum SN of the first group or the maximum SN of the second group, the UE 102 may start a PDCP reordering timer for the missing PDCP packet for which the SN is the lowest.

At operation 555, the UE 102 may combine groups of PDCP packets received on the physical links of the split bearer into a combined sequence of PDCP packets. At operation 560, the UE 102 may send the combined sequence of PDCP packets to an application layer of the UE 102 and/or other destination. The combined sequence may be ordered according to the SNs of the PDCP packets. In some cases, such as when PDCP packets have been determined to be lost, the combined sequence may include one or more gaps corresponding to the lost PDCP packets. As an example, the UE 102 may combine the first and second groups of PDCP packets received on the first and second physical links into a combined sequence of PDCP packets ordered according to the SNs of the PDCP packets. As another example, when a PDCP reordering timer for a particular PDCP packet has expired or been stopped, the UE 102 may determine a combined sequence of PDCP packets that includes received PDCP packets (on the physical links of the split bearer) for which SNs are less than the SN of the missing PDCP packet, in some cases. The combined sequence may be ordered and/or reordered in accordance with the SNs of the PDCP packets, in some cases.

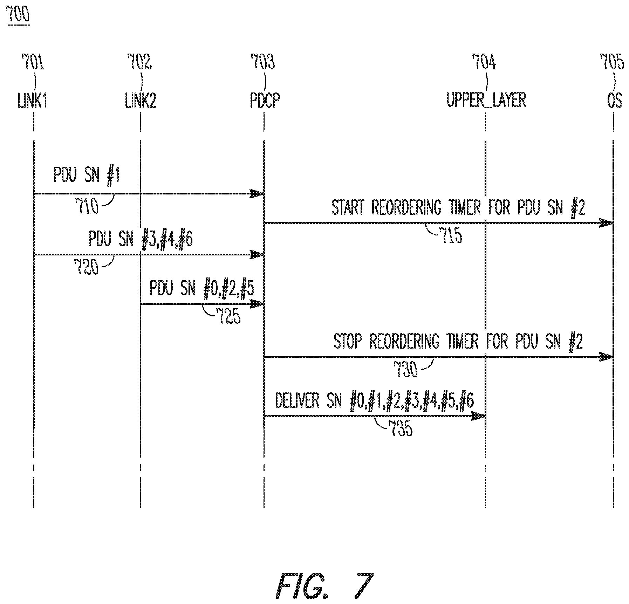

FIGs. 7-11 illustrate examples of packet reception and delivery in accordance with some embodiments. Although the examples shown in FIGs. 7-11 may illustrate some or all techniques, operations and/or concepts described herein, it is understood that embodiments are not limited by the examples shown in FIGs. 7-11 in terms of number, type, size, arrangement and/or other aspects of elements shown in FIGs. 7-11. Embodiments are also not limited to logic flows and/or decision strategies that may be illustrated in FIGs. 7-11.

Referring to FIG. 7. an example is shown in which no packets are missed and no reordering timer expirations occur. At operation 710, the UE 102 may receive a PDU with SN #1 (referred to as PDU #1) via link 701 and may store PDU #1 in the PDCP layer as the UE 102 may still be waiting for PDU #0. At operation 715, the UE 102 may start a reordering timer for PDU #2, since PDU #0 is missing. For instance, the reordering timer may be set for a PDU with an SN equal to the highest received SN plus one, in some cases. In this case, as PDU #1 has been received but there are still one or more missing PDUs with SN lower than PDU #1 (PDU #0 in this case), the reordering timer may be set for PDU #2 (which is the next highest SN after PDU #1). At operation 720, the UE 102 may receive PDUs #3, #4, and #6 via link 701 and may store PDUs #3, #4, and #6 in the PDCP layer, since the UE 102 is still waiting for PDU #0 and the reordering timer is running. At operation 725, the UE 102 may receive PDUs #0, #2, and #5 via link 702 and may stop the reordering timer for PDU #2 at operation 730, since gaps are filled. At operation 715, the UE 102 may deliver PDUs #0 - #6 to the upper layer.

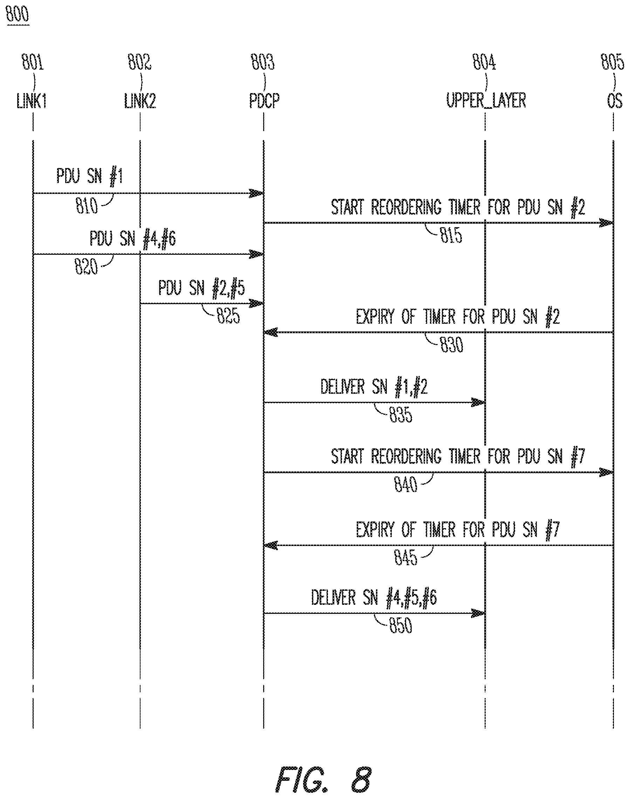

Referring to FIG. 8, an example is shown in which packets are lost. At operation 810, the UE 102 may receive PDU #1 via link 801 and may store PDU #1 in the PDCP layer since the UE 102 is still waiting for PDU #0. At operation 815, the UE 102 may start a reordering timer for PDU #2, as PDU #0 is missing. At operation 820, the UE 102 may receive PDUs #4 and #6 via link 801, and PDU #3 may be lost. The UE 102 may store PDUs #4 and #6 in the PDCP layer since the UE 102 is waiting for PDU #0 and the reordering timer is running. At operation 825, the UE 102 may receive PDUs #2 and #5 via link 802, and PDU #0 may be lost. The UE 102 may store PDUs #2 and #5 in the PDCP layer since the UE 102 is waiting for PDU #0 and the reordering timer is running. As indicated by 830, the reordering timer for PDU #2 may expire, and the UE 102 may deliver PDUs #1 and #2 to the upper layer 804 at operation 835. At operation 840, the UE 102 may start a reordering timer for PDU #7, as PDU #3 is missing. As indicated by 845, the reordering timer for PDU #7 may expire, and the UE 102 may deliver PDUs #4, #5, and #6 to the upper layer 804 at operation 850.

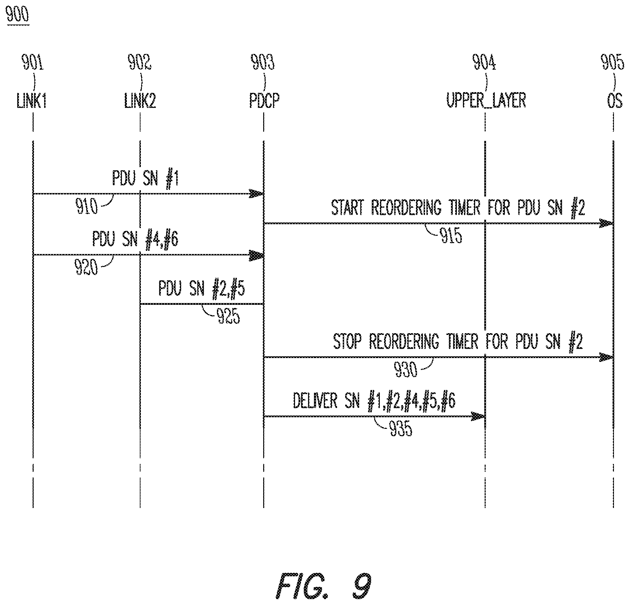

Referring to FIG. 9, another example is shown in which packets are lost. At operation 910, the UE 102 may receive PDU #1 via link 901 and may store PDU #1 in the PDCP layer since the UE 102 is waiting for PDU #0. At operation 915, the UE 102 may start a reordering timer for PDU #2, since PDU #0 is missing. At operation 920, the UE 102 may receive PDUs #4 and #6 via link 901 and PDU #3 may be lost. The UE 102 may store PDUs #4 and #6 in the PDCP layer since the UE 102 is waiting for PDU #0 and the reordering timer is running. At operation 925, the UE 102 may receive PDUs #2 and #5 via link 902 and PDU #0 may be lost. Accordingly, at operation 930, the UE 102 may stop the reordering timer for PDU #2 since higher SNs have already been received on both links 901 and 902 (PDUs #5 and #6). At operation 935, the PDUs #1, #2, #4, #5, and #6 may be delivered to the upper layer 904.

In some embodiments, the UE 102 (such as in the PDCP layer and/or other) may maintain parameters that indicate highest SNs received on each physical link of a split radio bearer. As an example, when a first and second link are used, the UE 102 may maintain a "highestSN1" parameter that indicates a highest received SN on a first link and may maintain a "highestSN2" parameter that indicates a highest received SN on a second link. In addition, when more than two links are used, the UE 102 may maintain similar parameters for the additional links. The UE 102 may be able to determine if a missing PDU may still be received or not. If the UE 102 has already received higher SNs on all available links than an SN related to a current gap, then it may not be possible to fill the gap in some cases.

As an example, when *n* links are available for a split bearer, the UE 102 may perform a test such as the following for a gap related to a missing SN, referred to as the current SN below. A test condition may be ( (currentSN < highestSN1) AND (currentSN < highestSN2) AND ... AND (currentSN <: highestSN*n*) ). If the condition is true, any or all of the following operations may be performed: the gap may be skipped (since it may not be possible to fill the gap), a reordering timer for the current SN may be stopped if it has been started and/or the UE 102 may check the next gap. Otherwise, if the test condition is false, a reordering timer for the current SN may be started.

As previously described, the SNs may include a bit field of a number of bits, such as 12, 15, 18 or other suitable number. In some cases, such as when the SNs reach the top of the range, a sequence of SNs may reach the highest possible value and may start over at an SN of 0. As an example, a receive window size (window_size) may be defined to be half of the SN range. The previous condition may be modified by replacement of individual comparisons between highestSN terms with the current SN. For instance, the previous test condition includes a term of (currentSN < highestSN1), which may be replaced by (((highestSN1 > currentSN) AND ((highestSN1 - currentSN) < window size)) OR ((highestSN1 < currentSN) AND ((highestSN1 + window_size) < currentSN))).

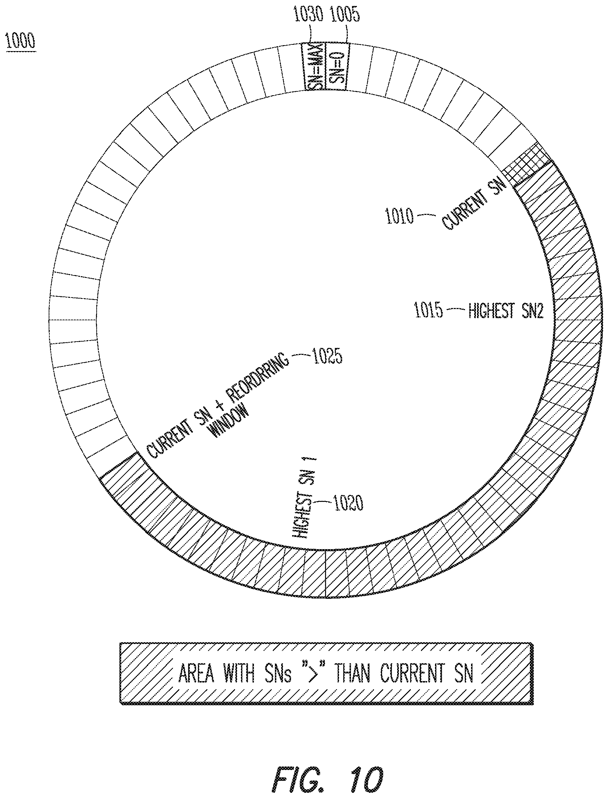

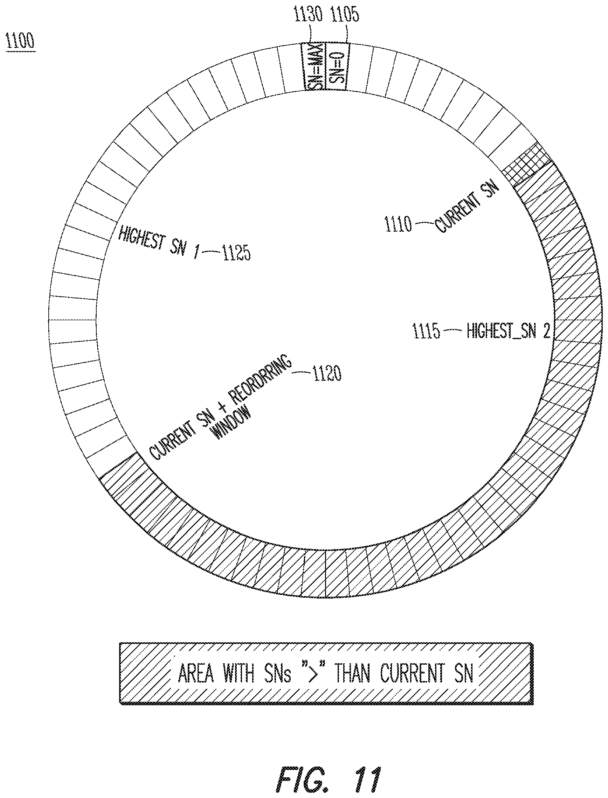

Referring to FIG. 10, the current SN 1010 is less than both the highest SN on a first link (1020) and the highest SN on a second link (1015). Both 1015 and 1020 are within die window between the current SN 1010 and the current SN plus the reordering window (1025). In this case, the current SN 1010 may be skipped. Referring to FIG. 11, the current SN 1110 is greater than the highest SN on a first link (1125) and is less than the highest SN on a second link (1115). In this case, the current SN 1110 may not be skipped.

In some embodiments, when a split bearer is configured for multiple links (such as *n* links) and a reordering function is used, at reception of a PDCP Data PDU from lower layers, the UE 102 may update a highest received PDCP SN for a particular link on which the PDU was received. For instance, as part of operation according to a 3GPP standard, the UE 102 may update one of the variables in the set {Highest_PDCP_RX_SN1, Highest_PDCP_RX_SN2, ... Highest_PDCP_RX_SNn], depending on which of the *n* links the PDU was received on. In this example, the "Highest_PDCP RX SNn" may be the highest SN received on link *n*. This example is not limiting, however, as the UE 102 may or perform other operations, in some cases, which may or may not be part of the 3 GPP standard.

A test condition may be evaluated. For instance, as part of operation according to a 3GPP standard, the UE 102 may determine a test condition such as (received PDCP SN =Last_Submitted_PDCP_RX_SN + 1 or received PDCP SN =Last_Submitted_PDCP_RX_SN - Maximum_PDCP_SN). The "received PDCP SN" may be an SN of a received PDCP Data PDU, the "Last Submitted PDCP 1 X SN " may be a last submitted PDCP SN, and the "Maximum_PDCP_SN" may be a maximum PDCP SN due to the range of the bit field included in the SNs. if the test condition is true, the UE 102 may skip missing SDUs in case related SN is lower than all parameters Highest PDCP SNx with x=l,2,...n. It should be noted that usage of a reordering window may be considered and modulo operation according to Maximum_PDCP_SN may be applied, in some cases. The skipped SDUs may not break the chain of consecutive SDUs, in some cases. If a reordering timer (related to a parameter t-Reordering) is running related to a skipped SDU, the reordering timer may be stopped and t-Reordering may be reset, in some cases.

State variables related to a highest received SN on each link may be determined, stored and/or used. For instance, as part of operation according to a 3GPP standard, variables such as Highest_PDCP_RX_SNx may be used for x = 1, 2, ... n, and may include the value of the latest PDCP SN that was received on split bearer link #x.

## Claims

1. An apparatus comprising: memory; and processing circuitry, configured to cause a User Equipment, UE, (102) to:
determine (515), for a group of two or more physical links of a split radio bearer, maximum sequence numbers, SNs, of Packet Data Convergence Protocol, PDCP, packets received on the physical links;
determine a SN of a missing PDCP packet based on the SNs of the received PDCP packets;
determine that the SN of the missing PDCP packet is greater than at least one of the maximum SNs;
in response to the determination that the SN of the missing PDCP packet is greater than at least one of the maximum SNs, start a PDCP reordering timer associated with the missing PDCP packet; wherein the processing circuitry is further configured to cause the UE to:
receive additional PDCP packets on the two or more second physical links;
determine an updated set of maximum SNs based on the additional PDCP packets;
determine that the SN of the missing packet is below the updated set of maximum SNs; and
determine (530) that the PDCP reordering timer for the missing PDCP packet is to be halted based on the determination that the SN of the missing PDCP packet is less than the updated set of maximum SNs.

2. The apparatus according to claim 1, wherein:
a first physical link includes a first Third Generation Partnership Project, 3GPP link.

3. The apparatus according to claim 1, wherein:
a first physical link includes a Third Generation Partnership Project, 3GPP, Long Term Evolution, LTE, wireless link and
the first physical link and a second physical link are aggregated as part of the split bearer in accordance with an LTE/WLAN Aggregation, LWA, arrangement.

4. The apparatus according to claim 1, the processing circuitry further configured to:
determine a SN of a further missing PDCP packet based on the SNs of the received PDCP packets;
determine that the SN of the further missing PDCP packet is less than at least one of the maximum SNs;
in response to the determination that the SN of the further missing PDCP packet is less than the maximum SNs:
halt a further PDCP reordering timer associated with the further missing PDCP packet;
determine a combined sequence of PDCP packets that includes PDCP packets for which the SNs are less than the SN of the further missing PDCP packet; and
send the combined sequence of PDCP packets to an application layer of the UE.

5. The apparatus of claim 4, wherein:
the processing circuitry is further configured to determine whether an additional PDCP reordering timer for an additional missing PDCP packet is to be started based at least partly on whether an SN of the additional missing PDCP packet is less than the maximum SNs.

6. The apparatus according to claim 1, the processing circuitry further configured to:
determine a SN of a further missing PDCP packet based on the SNs of the received PDCP packets;
determine that the SN of the further missing PDCP packet is less than at least one of the maximum SNs;
in response to the determination that the SN of a further missing PDCP packet is not less than the maximum SNs:
monitor for a reception of the further missing PDCP packet or for an expiration of a further PDCP reordering timer associated with the second missing PDCP packet.

7. The apparatus according to claim 6, the processing circuitry further configured to:
when the further PDCP reordering timer has expired:
determine a combined sequence of PDCP packets that includes received PDCP packets for which SNs are less than the SN of the second missing PDCP packet; and
send the combined sequence of PDCP packets to an application layer of the UE.

8. The apparatus according to claim 1, wherein the processing circuitry is further configured to send a combined sequence of PDCP packets to an application layer of the UE.

9. The apparatus according to claim 1, wherein the apparatus further includes a transceiver to receive PDCP packets.

10. The apparatus according to claim 1, wherein the processing circuitry includes a baseband processor, wherein the baseband processor is configured to determine the maximum SNs, to determine whether the PDCP reordering timer is to be halted, and to combine first and second groups of received PDCP packets into the combined sequence.

11. A non-transitory computer-readable storage medium that stores instructions for execution by one or more processors to perform operations for communication by a User Equipment, UE, the operations to configure the one or more processors to:
determine, for a group of two or more physical links of a split radio bearer, maximum sequence numbers, SNs, of Packet Data Convergence Protocol, PDCP, packets received on the physical links;
determine an SN of a missing PDCP packet based on SNs of the received PDCP packets;
determine that the SN of the missing PDCP packet is greater than at least one of the maximum SNs;
in response to the determination that the SN of the missing PDCP packet is greater than at least one of the maximum SNs, start a PDCP reordering timer associated with the missing PDCP packet; wherein the operations are further to configure the one or more processors to:
receive additional PDCP packets on the two or more physical links;
determine an updated set of maximum SNs based on the additional PDCP packets;
determine that the SN of the missing PDCP packet is below the updated set of maximum SNs; and
determine that the PDCP reordering timer for the missing PDCP packet is to be halted based on the determination that the SN of the missing PDCP packet is less than the updated set of maximum SNs.

12. The non-transitory computer-readable storage medium according to claim 11, the operations to further configure the one or more processors to determine that the missing PDCP packet is lost based on an expiration of the PDCP reordering timer.

13. The non-transitory computer-readable storage medium according to claim 11, wherein:
the physical links include Third Generation Partnership Project ,3GPP, Long Term Evolution, LTE, wireless links, and
the physical links are aggregated as part of the split radio bearer in accordance with a Dual Connectivity, DC, arrangement.

14. The non-transitory computer-readable storage medium according to claim 11, wherein:
at least one of the physical links includes a Third Generation Partnership Project ,3GPP, Long Term Evolution, LTE, wireless link,
at least one of the physical links includes a wireless local area network, WLAN, wireless link, and
the physical links are aggregated as part of the split radio bearer in accordance with an LTE/WLAN Aggregation, LWA, arrangement.

## Patentansprüche

1. Vorrichtung, die Folgendes umfasst: einen Speicher; und eine Verarbeitungsschaltung, die konfiguriert ist, um eine Benutzervorrichtung, UE, (102) zu veranlassen zum:
Bestimmen (515), für eine Gruppe von zwei oder mehr physikalischen Verbindungen eines geteilten Funkträgers, von maximalen Sequenznummern, SNs, von Packet Data Convergence Protocol, PDCP, Paketen, die auf den physikalischen Verbindungen empfangen wurden;
Bestimmen einer SN eines fehlenden PDCP-Pakets basierend auf die SNs der empfangenen PDCP-Pakete;
Bestimmen, dass die SN des fehlenden PDCP-Pakets größer ist als mindestens eine der maximalen SNs;
als Reaktion auf das Bestimmen, dass die SN des fehlenden PDCP-Pakets größer als mindestens eine der maximalen SNs ist, einen PDCP-Neuordnungs-Timer starten, der mit dem fehlenden PDCP-Paket verknüpft ist; wobei die Verarbeitungsschaltung ferner konfiguriert ist, um die UE zu veranlassen zum:
Empfangen von zusätzlichen PDCP-Paketen auf den zwei oder mehr zweiten physikalischen Verbindungen;
Bestimmen eines aktualisierten Satzes von maximalen SNs basierend auf die zusätzlichen PDCP-Pakete;
Bestimmen, dass die SN des fehlenden Pakets unterhalb des aktualisierten Satzes von maximalen SNs liegt; und
Bestimmen (530), dass der PDCP-Neuordnungs-Timer für das fehlende PDCP-Paket angehalten werden soll, basierend auf der Bestimmung, dass die SN des fehlenden PDCP-Pakets kleiner ist als der aktualisierte Satz maximaler SNs.

2. Vorrichtung nach Anspruch 1, wobei:
eine erste physikalische Verbindung eine erste Third-Generation-Partnership-Project-3GPP-Verbindung umfasst.

3. Vorrichtung nach Anspruch 1, wobei:
eine erste physikalische Verbindung eine drahtlose Third-Generation-Partnership-Project-3GPP-Long-Term-Evolution-LTE-Verbindung beinhaltet und
die erste physikalische Verbindung und eine zweite physikalische Verbindung als Teil des geteilten Trägers in Übereinstimmung mit einer LTE/WLAN-Aggregationsanordnung-LWA aggregiert werden.

4. Vorrichtung nach Anspruch 1, wobei der Verarbeitungsschaltung ferner konfiguriert ist zum:
Bestimmen einer SN eines weiteren fehlenden PDCP-Pakets basierend auf die SNs der empfangenen PDCP-Pakete;
Bestimmen, dass die SN des weiteren fehlenden PDCP-Pakets kleiner als mindestens einer der maximalen SNs ist;
als Reaktion auf das Bestimmen, dass die SN des weiteren fehlenden PDCP-Pakets kleiner als die maximalen SNs ist:
Halten eines weiteren PDCP-Neuordnungs-Timers, der mit dem weiteren fehlenden PDCP-Paket verbunden ist;
Bestimmen einer kombinierten Sequenz von PDCP-Paketen, die PDCP-Pakete, für die die SNs kleiner sind als die SN des weiteren fehlenden PDCP-Pakets, beinhaltet; und
Senden der kombinierten Sequenz von PDCP-Paketen an eine Anwendungsschicht der UE.

5. Vorrichtung nach Anspruch 4, wobei die Verarbeitungsschaltung ferner konfiguriert ist zum:
Bestimmen, ob ein zusätzlicher PDCP-Neuordnungs-Timer für ein zusätzliches fehlendes PDCP-Paket zu starten ist, zumindest teilweise basierend darauf, ob eine SN des zusätzlichen fehlenden PDCP-Pakets kleiner als die maximalen SNs ist.

6. Vorrichtung nach Anspruch 1, wobei die Verarbeitungsschaltung ferner konfiguriert ist zum:
Bestimmen einer SN eines weiteren fehlenden PDCP-Pakets basierend auf die SNs der empfangenen PDCP-Pakete;
Bestimmen, dass die SN des weiteren fehlenden PDCP-Pakets kleiner als mindestens einer der maximalen SNs ist;
als Reaktion auf das Bestimmen, dass die SN eines weiteren fehlenden PDCP-Pakets nicht kleiner als die maximalen SNs ist;
Überwachen des Empfangs des weiteren fehlenden PDCP-Pakets oder des Ablaufs eines weiteren PDCP-Neuordnungs-Timers, der mit dem zweiten fehlenden PDCP-Paket verbunden ist.

7. Vorrichtung nach Anspruch 6, wobei die Verarbeitungsschaltung ferner konfiguriert ist zum:
wenn der weitere PDCP-Neuordnungs-Timer abgelaufen ist:
Bestimmen einer kombinierten Sequenz von PDCP-Paketen, die empfangene PDCP-Pakete beinhalten, deren SNs kleiner sind als die SN des zweiten fehlenden PDCP-Pakets; und
Senden der kombinierten Sequenz von PDCP-Paketen an eine Anwendungsschicht der UE.

8. Vorrichtung nach Anspruch 1, wobei die Verarbeitungsschaltung ferner konfiguriert ist zum:
Senden einer kombinierten Sequenz von PDCP-Paketen an einer Anwendungsschicht der UE.

9. Vorrichtung nach Anspruch 1, wobei die Vorrichtung ferner einen Sender-Empfänger zum Empfangen von PDCP-Paketen beinhaltet.

10. Vorrichtung nach Anspruch 1, wobei die Verarbeitungsschaltung einen Basisbandprozessor beinhaltet, wobei der Basisbandprozessor konfiguriert ist zum:
Bestimmen der maximalen SNs, um zu bestimmen, ob der PDCP-Neuordnungs-Timer angehalten werden soll, und um erste und zweite Gruppen von empfangenen PDCP-Paketen zu der kombinierten Sequenz zu kombinieren.

11. Nicht-übertragbares computerlesbares Speichermedium, das Befehle zum Ausführen durch einen oder mehrere Prozessoren speichert, um Operationen zur Kommunikation durch eine Benutzervorrichtung, UE, durchzuführen, wobei die Operationen den einen oder mehrere Prozessoren konfigurieren zum:
Bestimmen, für eine Gruppe von zwei oder mehr physikalischen Verbindungen eines geteilten Funkträgers, maximale Sequenznummern, SNs, von Packet-Data-Convergence-Protocol-PDCP-Paketen, die auf den physikalischen Verbindungen empfangen wurden;
Bestimmen einer SN eines fehlenden PDCP-Pakets basierend auf die SNs der empfangenen PDCP-Pakete;
Bestimmen, dass die SN des fehlenden PDCP-Pakets größer ist als mindestens eine der maximalen SNs;
als Reaktion auf das Bestimmen, dass die SN des fehlenden PDCP-Pakets größer ist als mindestens eine der maximalen SNs, Starten eines PDCP-Neuordnungs-Timers, der mit dem fehlenden PDCP-Paket verknüpft ist; wobei die Operationen ferner darin bestehen, den einen oder die mehreren Prozessoren zu konfigurieren zum:
Empfangen zusätzlicher PDCP-Pakete auf den zwei oder mehr physikalischen Verbindungen;
Bestimmen eines aktualisierten Satzes von maximalen SNs basierend auf den zusätzlichen PDCP-Paketen;
Bestimmen, dass die SN des fehlenden PDCP-Pakets unter dem aktualisierten Satz von maximalen SNs liegt; und
Bestimmen, dass der PDCP-Neuordnungs-Timer für das fehlende PDCP-Paket angehalten werden soll, basierend auf der Bestimmung, dass die SN des fehlenden PDCP-Pakets kleiner ist als der aktualisierte Satz maximaler SNs.

12. Nicht-übertragbares computerlesbares Speichermedium nach Anspruch 11, wobei die Operationen ferner den einen oder die mehreren Prozessoren konfigurieren, um zu bestimmen, dass das fehlende PDCP-Paket basierend auf ein Ablauf des PDCP-Neuordnungszeitgebers verloren ist.

13. Nicht-übertragbares computerlesbares Speichermedium nach Anspruch 11, wobei:
die physikalischen Verbindungen das Third-Generation-Partnership-Project-3GPP-Long-Term-Evolution-LTE drahtlose Verbindungen umfassen, und
die physikalischen Verbindungen als Teil des geteilten Funkträgers gemäß einer Dual-Connectivity-DC-Anordnung aggregiert werden.

14. Nicht-übertragbares computerlesbares Speichermedium nach Anspruch 11, wobei:
mindestens eine der physikalischen Verbindungen eine drahtlose Verbindung des Third-Generation-Partnership-Project-3GPP-Long-Term-Evolution-LTE beinhaltet,
mindestens eine der physikalischen Verbindungen eine drahtlose lokale Netzwerk-, WLAN-, Verbindung umfasst, und
die physikalischen Verbindungen als Teil des geteilten Funkträgers in Übereinstimmung mit einer LTE/WLAN-Aggregationsanordnung-LWA aggregiert werden.

## Revendications

1. Un appareil comprenant : une mémoire ; et une circuiterie de traitement configurée pour amener un équipement utilisateur, UE, (102) à :
déterminer (515), pour un groupe d'au moins deux liaisons physiques d'un bearer radio divisé, de numéros de séquence, SN, maximaux de paquets de protocole de convergence de données par paquets, PDCP, reçus sur les liaisons physiques ;
déterminer un SN d'un paquet PDCP manquant sur la base des SN des paquets PDCP reçus ;
déterminer que le SN du paquet PDCP manquant est supérieur à au moins un des SN maximaux ;
en réponse à la détermination que le SN du paquet PDCP manquant est supérieur à au moins un des SN maximaux, démarrer une temporisation de réordonnancement PDCP associée au paquet PDCP manquant ; dans lequel la circuiterie de traitement est configurée en outre pour amener l'UE à :
recevoir des paquets PDCP additionnels sur les au moins deux deuxième liaisons physiques ;
déterminer un ensemble mis à jour de SN maximaux sur la base des paquets PDCP additionnels ;
déterminer que le SN du paquet manquant est inférieur à l'ensemble mis à jour de SN maximaux ; et
déterminer (530) que la temporisation de réordonnancement PDCP pour le paquet PDCP manquant doit être arrêtée sur la base de la détermination que le SN du paquet PDCP manquant est inférieur à l'ensemble mis à jour de SN maximaux.

2. L'appareil selon la revendication 1, dans lequel :
une première liaison physique comporte une première liaison du Projet de partenariat de troisième génération, 3GPP.

3. L'appareil selon la revendication 1, dans lequel :
une première liaison physique comporte une liaison sans fil Évolution à long terme, LTE, du Projet de partenariat de troisième génération, 3GPP, et
la première liaison physique et une deuxième liaison physique sont agrégées en tant que partie du bearer divisé conformément à un agencement d'agrégation LTE/WLAN, LWA.

4. L'appareil selon la revendication 1, la circuiterie de traitement étant configurée en outre pour :
déterminer un SN d'un autre paquet PDCP manquant sur la base des SN des paquets PDCP reçus ;
déterminer que le SN de l'autre paquet PDCP manquant est inférieur à au moins un des SN maximaux ;
en réponse à la détermination que le SN de l'autre paquet PDCP manquant est inférieur aux SN maximaux :
arrêter une autre temporisation de réordonnancement PDCP associée à l'autre paquet PDCP manquant ;
déterminer une séquence combinée de paquets PDCP qui comporte des paquets PDCP pour lesquels les SN sont inférieurs au SN de l'autre paquet PDCP manquant ; et
envoyer la séquence combinée de paquets PDCP à une couche d'application de l'UE.

5. L'appareil selon la revendication 4, dans lequel :
la circuiterie de traitement est configurée en outre pour déterminer si une temporisation de réordonnancement PDCP additionnelle pour un paquet PDCP manquant additionnel doit être démarrée sur la base au moins en partie de la condition si un SN du paquet PDCP manquant additionnel est inférieur aux SN maximaux.

6. L'appareil selon la revendication 1, la circuiterie de traitement étant configurée en outre pour :
déterminer un SN d'un autre paquet PDCP manquant sur la base des SN des paquets PDCP reçus ;
déterminer que le SN de l'autre paquet PDCP manquant est inférieur à au moins un des SN maximaux ;
en réponse à la détermination que le SN d'un autre paquet PDCP manquant n'est pas inférieur aux SN maximaux :
surveiller une réception de l'autre paquet PDCP manquant ou une expiration d'une autre temporisation de réordonnancement PDCP associée au deuxième paquet PDCP manquant.

7. L'appareil selon la revendication 6, la circuiterie de traitement étant configurée en outre pour :
quand l'autre temporisation de réordonnancement PDCP a expiré :
déterminer une séquence combinée de paquets PDCP qui comporte des paquets PDCP reçus pour lesquels des SN sont inférieurs au SN du deuxième paquet PDCP manquant ; et
envoyer la séquence combinée de paquets PDCP à une couche d'application de l'UE.

8. L'appareil selon la revendication 1, dans lequel la circuiterie de traitement est configurée en outre pour envoyer une séquence combinée de paquets PDCP à une couche d'application de l'UE.

9. L'appareil selon la revendication 1, dans lequel l'appareil comporte en outre un émetteur-récepteur pour recevoir des paquets PDCP.

10. L'appareil selon la revendication 1, dans lequel la circuiterie de traitement comporte un processeur de bande de base, dans lequel le processeur de bande de base est configuré pour déterminer les SN maximaux, pour déterminer si la temporisation de réordonnancement PDCP doit être arrêtée et pour combiner les premier et deuxième groupes de paquets PDCP reçus dans la séquence combinée.

11. Un support de stockage non transitoire lisible par calculateur qui stocke des instructions à exécuter par un ou plusieurs processeurs pour réaliser des opérations pour la communication par un équipement utilisateur, UE, les opérations étant destinées à configurer les un ou plusieurs processeurs pour :
déterminer, pour un groupe d'au moins deux liaisons physiques d'un bearer radio divisé, de numéros de séquence, SN, maximaux de paquets de protocole de convergence de données par paquets, PDCP, reçus sur les liaisons physiques ;
déterminer un SN d'un paquet PDCP manquant sur la base des SN des paquets PDCP reçus ;
déterminer que le SN du paquet PDCP manquant est supérieur à au moins un des SN maximaux ;
en réponse à la détermination que le SN du paquet PDCP manquant est supérieur à au moins un des SN maximaux, démarrer une temporisation de réordonnancement PDCP associée au paquet PDCP manquant ; dans lequel les opérations sont destinées en outre à configurer les un ou plusieurs processeurs pour :
recevoir des paquets PDCP additionnels sur les au moins deux liaisons physiques ;
déterminer un ensemble mis à jour de SN maximaux sur la base des paquets PDCP additionnels ;
déterminer que le SN du paquet PDCP manquant est inférieur à l'ensemble mis à jour de SN maximaux ; et
déterminer que la temporisation de réordonnancement PDCP pour le paquet PDCP manquant doit être arrêtée sur la base de la détermination que le SN du paquet PDCP manquant est inférieur à l'ensemble mis à jour de SN maximaux.

12. Le support de stockage non transitoire lisible par calculateur selon la revendication 11, les opérations étant destinées en outre à configurer les un ou plusieurs processeurs pour déterminer que le paquet PDCP manquant est perdu sur la base d'une expiration de la temporisation de réordonnancement PDCP.

13. Le support de stockage non transitoire lisible par calculateur selon la revendication 11, dans lequel :
les liaisons physiques comportent des liaisons sans fil Évolution à long terme, LTE, du Projet de partenariat de troisième génération, 3GPP, et
les liaisons physiques sont agrégées en tant que partie du bearer radio divisé conformément à un agencement de double connectivité, DC.

14. Le support de stockage non transitoire lisible par calculateur selon la revendication 11, dans lequel :
au moins une des liaisons physiques comporte une liaison sans fil Évolution à long terme, LTE, du Projet de partenariat de troisième génération, 3GPP,
au moins une des liaisons physiques comporte une liaison sans fil de réseau local sans fil, WLAN, et
les liaisons physiques sont agrégées en tant que partie du bearer radio divisé conformément à un agencement d'agrégation LTE/WLAN, LWA.
